# EUROPEAN PATENT APPLICATION

(11) **EP 2 570 788 A1**
(43) Date of publication of application: **20.03.2013**
(21) Application number: 12183778.5
(22) Date of filing: 10.09.2012
(51) Int. Cl.: G01M 3/38, G01M 3/04

(54) **Non-Contact Fluid Leak Detection System**

(30) Priority: 14.09.2011 US 201113232475
(71) Applicant: General Electric Company, Schenectady, NY 12345 (US)
(72) Inventor: Nemani, Subhash, 500081 Hyderabad, Anhdra Pradesh (IN); Kanth, Thatikonda Sai Ravi, 500081 Hyderabad, Andhra Pradesh (IN)
(74) Representative: Cleary, Fidelma

(57) **Abstract**

A non-contact fluid leak detection system (50) includes an image capture device (53) configured and disposed to produce an image signal, and a leak detection member (60) operatively connected to the image capture device (53). The leak detection member (60) is configured and disposed to evaluate the image signal to detect a particular color associated with leaked fluid.

## Description

### BACKGROUND OF THE INVENTION

The subject matter disclosed herein relates to the art of fluid leak detection and, more specifically, to a non-contact fluid leak detection system.

Detecting leaks is desirable in many applications. The loss of fluid from a system may lead to damage. Conversely, the presence of fluid in an area not designed for fluid exposure could also lead to damage. Conventional systems for detecting leaks include detecting liquid level using float sensors, or other forms of contact-type sensors. If the liquid falls below a predetermined level, a leak may exist. While such sensors may detect the presence of a leak, the destination or final resting spot of the leaked fluid remains unknown. Other systems employ conductivity sensors to detect the presence of leaked fluid. Conductivity sensors employ multiple electrodes that are coupled to a voltage source. The electrodes are arranged in an area of a potential leak. Leaked fluid contacting at last two of the electrodes closes a circuit to the voltage source. The closed circuit provides a signal indicating the existence of leaked fluid.

### BRIEF DESCRIPTION OF THE INVENTION

According to one aspect of the invention, a non-contact fluid leak detection system includes an image capture device configured and disposed to produce an image signal, and a leak detection member operatively connected to the image capture device. The leak detection member being configured and disposed to evaluate the image signal to detect a particular color associated with leaked fluid.

According to another aspect of the invention, a method of detecting fluid leaks includes capturing an image of an area, converting the image to an image signal, passing the image signal to a leak detection member, analyzing the image signal in the leak detection member, detecting a particular color in the image signal, and detecting a fluid leak based on the particular color in the image signal.

According to yet another aspect of the invention, an apparatus including a fluid zone containing an amount of fluid, a non-fluid zone fluidly isolated from amount of fluid in the fluid zone, and the non-contact fluid leak detection system positioned as described above to detect fluid from the fluid zone in the non-fluid zone.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 is a perspective view of an apparatus including a fluid zone and a non-fluid zone having a non-contact fluid leak detection system arranged in the non-fluid zone in accordance with an exemplary embodiment; and
FIG. 2 is a flow diagram illustrating a method of detecting leaks with the non-contact fluid leak detection system of the exemplary embodiment.

The detailed description explains embodiments of the invention, together with advantages and features, by way of example with reference to the drawings.

### DETAILED DESCRIPTION OF THE INVENTION

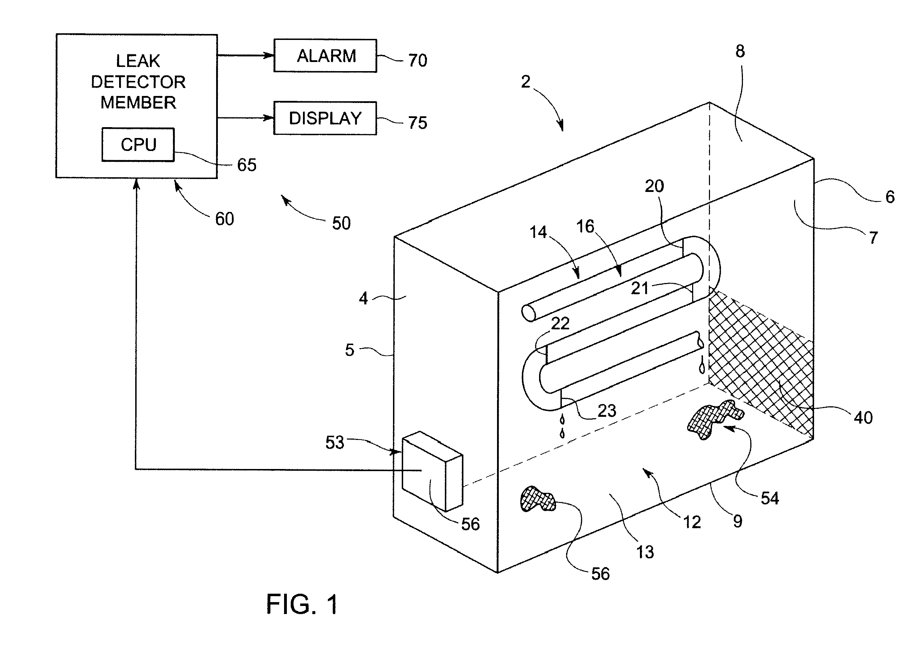

With reference to FIG. 1, an apparatus in accordance with the exemplary embodiment is indicated generally at 2. Apparatus 2 includes a plurality of walls 4-9 that define a non-fluid zone 12 having an interior space 13. Apparatus 2 also includes a fluid zone 14 arranged within interior space 13. In the exemplary aspect shown, fluid zone 14 constitutes a plurality of pipes 16 joined through a number of fittings 20-23. Of course it should be understood that the number and type of piling could vary. It should also be understood that other types of fluid zones could be arranged within apparatus 2. In accordance with one aspect of the exemplary embodiment, interior space 37 includes a color contrasting member 40 arranged on wall 6. The particular location of color contrasting member 40 may vary.

At this point it should be understood that apparatus 2 can take the form of a wide variety of systems that generally include an area in which there exists fluid and an area in which the presence of fluid would indicate the existence of fluid leak. For example, the fluid zone could constitute machinery that employs various liquids as lubricant or otherwise. The presence of fluid in the non-fluid zone would constitute a leak of lubricant, coolant or the like. The particular type of fluid can vary and, as will be discussed more fully below, can include volatile and non-volatile fluids as well as colored and colorless fluids. Exemplary embodiments pertain to a non-contact fluid detection system 50 that is configured to detect a presence of fluid in the area in which there is generally no fluid. In the present case, non-contact fluid leak detection system 50 detects one or more portions, such as shown at 54 and 56 of the amount of fluid 20 that have leaked into non-fluid zone 6. Portions 54 and 56 may have leaked from fittings 20-23 or from any point along pipes 16 as a result of wear and the like. As will be discussed more fully below, the fluid may possess a distinct color such as shown in portion 54, or may be colorless and reflect a color from color contrasting member 40 such as shown in portion 56. At this point it should be understood that the term "non-contact" should be understood to mean that leak detection system 50 detects leaks without ever contacting any portion of detected leaked fluid.

Non-contact fluid leak detection system 50 includes an image capture device 53 positioned so as to capture an image(s) of non-fluid zone 6. In accordance with one aspect of the exemplary embodiment, image capture device 53 takes the form of a digital image capture device that captures digital still images. In accordance with another aspect of the exemplary embodiment, image capture device 53 takes the form of a digital video camera that captures digital video images. Regardless of form, captured images are processed into image signals that are passed to a leak detection member 60. Leak detection member 60 includes a processor 65 that receives and evaluates the image signals provided by image capture device 53. Leak detection member 60 is also shown operatively coupled to an alarm 70 and a display 75. With this arrangement, upon detecting a leak, leak detection member 60 can signal one, the other, or both of alarm 70 and display 75 to provide an audible and/or visual signal to monitoring personnel indicating the existence of fluid entering non-fluid zone 6 as will be discussed more fully below.

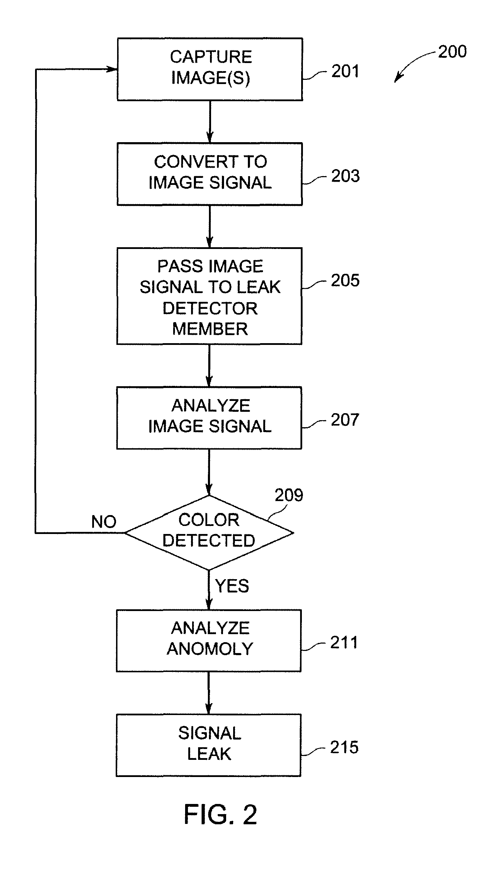

Reference will now be made to FIG. 2 in describing an exemplary method 200 employed by non-contact fluid leak detection system 50 for detecting fluid leaks. In accordance with an exemplary embodiment, image capture device 53 captures one or more or a series of images of interior space 37 as indicated in block 201. The image(s) is converted to an image signal in step 203 and passed to leak detection member 60 in block 205. Leak detection member 60 analyzes the image(s) in block 207. Leak detection member 60 determines whether an anomalous color exists in the image signal as indicated in block 209. More specifically, leak detection member 60 processes the image signal for a particular color that is indicative of leaked fluid. The particular color may be a property of the fluid or may be reflected onto the fluid by color contrasting member 40. The particular color may also indicate evaporated fluid. That is, if a volatile fluid is know to exhibit a change color upon evaporating, in addition to detecting the general color of the fluid, leak detection member is programmed to detect a color associated with the evaporated fluid. If the fluid to be detected is colorless, leak detector member 60 is configured to detect a color (such as from color contrasting member 40) reflected from the leaked fluid. If no fluid is detected in the image signal, additional images are captured and analyzed so as to periodically or continuously monitor non-fluid zone 6.

If fluid is detected, the image signal is further analyzed as indicated in block 211. For example, the image signal may be analyzed to determining various properties of the leaking fluid such as spread, location and the like. In this manner, leak detection member 60 may determine whether the leak requires immediate attention or whether the leak may go unrepaired a period of time so as not to interrupt any processes that may be associated with the fluid. Regardless of the nature of the leak, leak detection member 60 provides a signal indicating that leaking fluid exists in non-fluid zone 6. The signal may take the form of audible alarm 70 or may be provided as a visual indication, along with any additional information, on display 75.

At this point it should be understood that the exemplary embodiments describe a system that detects leaking fluid without the need to be actual contact with the fluid. The non-contact fluid leak detection system can be incorporated in a wide array of systems in which detecting leaks is desirable. Also, while shown as detecting liquid leaks, the exemplary embodiments could be also configured to detect gaseous fluids.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

**1.** A non-contact fluid leak detection system (50) comprising:
an image capture device (53) configured and disposed to produce an image signal; and
a leak detection member (60) operatively connected to the image capture device (53), the leak detection member (60) being configured and disposed to evaluate the image signal to detect a particular color associated with leaked fluid.

**2.** The non-contact fluid leak detection system (50) according to claim 1, wherein the image capture device (53) comprises a digital image capture device configured and disposed to output a digital image signal.

**3.** The non-contact fluid leak detection system (50) according to claim 2, wherein the digital image capture device comprises a video image capture device.

**4.** The non-contact fluid leak detection system (50) according to claim 2 or 3, wherein the leak detection member (60) includes a digital signal processor (65) that is configured and disposed to evaluate the digital image signal.

**5.** The non-contact fluid leak detection system (50) according to any of claims 1 to 4, further comprising: a color contrasting member (40) configured and disposed to reflect a color onto leaked fluid.

**6.** The non-contact fluid leak detection system (50) according to any of claims 1 to 5, wherein the leak detection member (60) is configured and disposed to detect a color associated with evaporated fluid.

**7.** The non-contact fluid leak detection system (50) according to any of claims 1 to 6, wherein the leak detection member (60) is configured and disposed to detect liquid having a particular color or a colorless liquid.

**9.** A method of detecting fluid leaks, the method comprising:
capturing an image of an area;
converting the image to an image signal;
passing the image signal to a leak detection member (60);
analyzing the image signal in the leak detection member (60);
detecting a particular color in the image signal; and
signaling a fluid leak based on the particular color detected in the image signal.

**9.** The method of claim 8, further comprising: analyzing the anomaly to determine a parameter of the fluid leak.

**10.** The method of claim 8 or 9, further comprising: capturing additional images of the area.

**11.** The method of claim 10, wherein capturing additional images of the area includes capturing video images of the area.

**12.** The method of any of claims 8 to 11, wherein detecting the anomaly in the image signal includes detecting a change in color of the area, the change in color being associated with the fluid leak.

**13.** The method of any of claims 8 to 12, wherein detecting the fluid leak includes detecting a colored liquid, or detecting a colorless liquid.

**14.** The method of claim 13, wherein detecting the colorless liquid includes reflecting a color onto the colorless liquid.

**15.** An apparatus (2) comprising:
a fluid zone (14) containing an amount of fluid;
a non-fluid zone (12) fluidly isolated from the amount of fluid in the fluid zone (14); and
the non-contact fluid leak detection system (50) of any of claims 1 to 8, positioned to detect fluid from the fluid zone (14) in the non-fluid zone (12).
